(19) Europäisches Patentamt
European Patent Office
Office européen des brevets

(11) **EP 4 586 660 A1**

(12) **EUROPEAN PATENT APPLICATION**
published in accordance with Art. 153(4) EPC

(43) Date of publication:
**16.07.2025 Bulletin 2025/29**

(21) Application number: **23870520.6**

(22) Date of filing: **20.09.2023**

(51) International Patent Classification (IPC):
**H04W 8/24** (2009.01)

(52) Cooperative Patent Classification (CPC):
**H04W 8/24; H04W 36/18; H04W 72/0453;
H04W 72/21**

(86) International application number:
**PCT/CN2023/120018**

(87) International publication number:
**WO 2024/067288 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 CN 202211215709**

(71) Applicant: **Huawei Technologies Co., Ltd.
Shenzhen, Guangdong 518129 (CN)**

(72) Inventors:
• **HU, Dan**
  **Shenzhen, Guangdong 518129 (CN)**
• **HAN, Jing**
  **Shenzhen, Guangdong 518129 (CN)**
• **LIU, Ye**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **METHOD AND APPARATUS FOR SENDING UPLINK SIGNAL**

(57)     An uplink signal sending method and an apparatus are disclosed, and relate to the field of wireless communication. The method includes: When a terminal accesses at least two cells that are deployed in a non-co-located manner and obtains a plurality of timing advance groups, adjacent PUSCH slots on different uplink carriers are not aligned because different uplink carriers correspond to different timing advances; when the terminal performs switching between two different uplink carriers, the terminal omits sending an uplink signal in a first time period, and sends an uplink signal on a second uplink carrier to which the uplink radio frequency chain is switched from a first uplink carrier. This avoids service interruption caused, due to non-alignment between frame boundaries of the uplink carriers before and after the uplink carrier switching, when the terminal starts uplink transmission after a switching time of an uplink radio frequency chain and before the uplink radio frequency chain switching is completed. In addition, this helps achieve a higher uplink transmission rate, higher spectrum utilization, and a larger uplink capacity by utilizing dynamic spectrum selection during uplink radio frequency chain switching in non-co-located deployment.

FIG. 3

## Description

This application claims priority to Chinese Patent Application No. 202211215709.4, filed with the China National Intellectual Property Administration on September 30, 2022 and entitled "UPLINK SIGNAL SENDING METHOD AND APPARATUS", which is incorporated herein by reference in its entirety.

## TECHNICAL FIELD

Embodiments of this application relate to the wireless communication field, and in particular, to an uplink signal sending method and an apparatus.

## BACKGROUND

With development and evolution of technologies, a radio frequency chain switching technology is introduced into a 5th generation (the fifth generation, 5G) mobile communication technology. For example, a terminal supports radio frequency chain switching between a 3.5 GHz frequency band and a 1.8 GHz frequency band, to occupy different frequency band resources for transmission of an uplink signal. To use a spectrum more flexibly, radio frequency chain switching in a frequency band combination including three frequency bands or four frequency bands is supported. However, in non-co-located deployment, distances from two network devices to the terminal may be different, timing advances delivered by the two network devices for the terminal are different, and service interruption is consequently caused due to radio frequency chain switching.

## SUMMARY

This application provides an uplink signal sending method and an apparatus, to resolve a problem of service interruption caused by radio frequency chain switching in non-co-located deployment.

According to a first aspect, an uplink signal sending method is provided. The method may be applied to a terminal, or the method may be applied to a communication apparatus that can support a terminal in implementing the method. For example, the communication apparatus includes a chip system. The method includes: sending capability information to a first network device on a first uplink carrier, for the first network device to determine a switching time of an uplink radio frequency chain of the terminal; when a first uplink signal is sent to the first network device on the first uplink carrier, obtaining first signaling indicating uplink carrier switching; and omitting sending an uplink signal in a first time period, and sending, after the first time period, a second uplink signal to a second network device on a second uplink carrier. The first uplink carrier belongs to a first frequency band, and the first uplink carrier belongs to a first timing advance group (Timing Advance Group, TAG). The second uplink carrier belongs to a second frequency band, and the second uplink carrier belongs to a second TAG. The first time period is greater than the uplink radio frequency chain switching time. The first frequency band is different from the second frequency band, and the first TAG is different from the second TAG.

When the terminal accesses at least two cells that are deployed in a non-co-located manner and obtains a plurality of timing advance groups, adjacent physical uplink shared channel (physical uplink shared channel, PUSCH) slots on different uplink carriers are not aligned because different uplink carriers correspond to different timing advances. In this way, when performing switching between two different uplink carriers, the terminal omits sending the uplink signal in the first time period. To be specific, after waiting for a time period longer than the uplink radio frequency chain switching time indicated by a capability of the terminal, the terminal sends the uplink signal on the second uplink carrier to which the uplink radio frequency chain is switched from the first uplink carrier. This avoids service interruption caused, due to non-alignment between frame boundaries of the uplink carriers before and after the uplink carrier switching, when the terminal starts uplink transmission after a switching time of an uplink radio frequency chain and before the uplink radio frequency chain switching is completed. In addition, this helps achieve a higher uplink transmission rate, higher spectrum utilization, and a larger uplink capacity by utilizing dynamic spectrum selection during uplink radio frequency chain switching in non-co-located deployment.

In a possible implementation, the first time period is greater than or equal to a sum of the switching time and a maximum transmission timing difference. The maximum transmission timing difference is a preconfigured maximum offset for uplink carriers with non-aligned frame boundaries. The uplink signal is sent in a time period of the sum of the switching time and the maximum transmission timing difference, to ensure that the uplink signal is successfully sent on the second uplink carrier to which the uplink radio frequency chain is switched from the first uplink carrier.

In another possible implementation, the first time period is greater than or equal to a sum of the switching time, a maximum transmission timing difference, and a protocol-predefined first value. In this way, the another protocol-predefined first value is added in the first time period, to further ensure that the uplink signal is successfully sent on the second uplink carrier to which the uplink radio frequency chain is switched from the first uplink carrier.

In another possible implementation, the first time period is a time period corresponding to a symbol overlapping the uplink radio frequency chain switching time of the terminal on the first uplink carrier and/or a symbol overlapping the uplink radio frequency chain switching time of the terminal on the second uplink carrier.

In another possible implementation, the first time period is greater than or equal to a sum of the switching time, double maximum transmission timing differences, and a protocol-predefined first value.

According to a second aspect, an uplink signal receiving method is provided. The method may be applied to a network device, or the method may be applied to a communication apparatus that can support a network device in implementing the method. For example, the communication apparatus includes a chip system. The method includes: receiving capability information on a first uplink carrier, and determining a switching time of an uplink radio frequency chain of a terminal; sending first signaling, indicating the terminal to perform uplink switching; and omitting receiving an uplink signal in a first time period, and receiving a second uplink signal on a second uplink carrier. The first uplink carrier belongs to a first frequency band, and the first uplink carrier belongs to a first TAG. The second uplink carrier belongs to a second frequency band, and the second uplink carrier belongs to a second TAG. The first time period is greater than the uplink radio frequency chain switching time.

When the terminal accesses at least two cells that are deployed in a non-co-located manner and obtains a plurality of timing advance groups, adjacent PUSCH slots on different uplink carriers are not aligned because different uplink carriers correspond to different timing advances. Therefore, when performing switching between two different uplink carriers, the terminal omits sending the uplink signal in the first time period. To be specific, the network device omits receiving the uplink signal in the first time period, and after waiting for a time period longer than the uplink radio frequency chain switching time indicated by a capability of the terminal, the network device receives the uplink signal on the second uplink carrier to which the uplink radio frequency chain is switched from the first uplink carrier. This avoids service interruption caused, due to non-alignment between frame boundaries of the uplink carriers before and after the uplink carrier switching, when the terminal starts uplink transmission after a switching time of an uplink radio frequency chain and before the uplink radio frequency chain switching is completed. **In** addition, this helps achieve a higher uplink transmission rate, higher spectrum utilization, and a larger uplink capacity by utilizing dynamic spectrum selection during uplink radio frequency chain switching in non-co-located deployment.

In a possible implementation, the first time period is greater than or equal to a sum of the switching time and a maximum transmission timing difference. The maximum transmission timing difference is a preconfigured maximum offset for uplink carriers with non-aligned frame boundaries. The uplink signal is sent in a time period of the sum of the switching time and the maximum transmission timing difference, to ensure that the uplink signal is successfully sent on the second uplink carrier to which the uplink radio frequency chain is switched from the first uplink carrier.

In another possible implementation, the first time period is greater than or equal to a sum of the switching time, a maximum transmission timing difference, and an error, where the error includes at least one of a measurement error of the terminal and thermal noise. In this case, the another error is added in the first time period, to further ensure that the uplink signal is successfully sent on the second uplink carrier to which the uplink radio frequency chain is switched from the first uplink carrier.

In another possible implementation, the first time period is a time period corresponding to a symbol overlapping the uplink radio frequency chain switching time of the terminal on the first uplink carrier and/or a symbol overlapping the uplink radio frequency chain switching time of the terminal on the second uplink carrier.

In another possible implementation, the first time period is greater than or equal to a sum of the switching time, double maximum transmission timing differences and an error.

According to a third aspect, a communication apparatus is provided. For beneficial effects, refer to the descriptions of the first aspect. Details are not described herein again. The communication apparatus has a function of implementing the behavior in the method embodiment in the first aspect. The function may be implemented by hardware, or may be implemented by hardware executing corresponding software. The hardware or the software includes one or more modules corresponding to the foregoing function. In a possible design, the communication apparatus includes a transceiver unit and a processing unit. The transceiver unit is configured to: send capability information, so that a network device determines a switching time of an uplink radio frequency chain of a terminal; when a first uplink signal is sent to a first network device on a first uplink carrier, obtain first signaling indicating uplink switching; and omit sending an uplink signal in a first time period, and send a second uplink signal to a second network device on a second uplink carrier. The first uplink carrier belongs to a first frequency band, and the first uplink carrier belongs to a first TAG. The second uplink carrier belongs to a second frequency band, and the second uplink carrier belongs to a second TAG. The first time period is greater than the uplink radio frequency chain switching time. The processing unit is configured to determine, based on the first signaling, not to send the uplink signal in the first time period. These modules may perform corresponding functions in the method example in the first aspect. For details, refer to the detailed descriptions in the method example. The details are not described herein again.

According to a fourth aspect, a communication apparatus is provided. For beneficial effects, refer to the descriptions of the second aspect. Details are not described herein again. The communication apparatus has a function of implementing the behavior in the method embodiment in the second aspect. The function may be implemented by hardware, or may be implemented by hardware executing corresponding software. The hardware or the software includes one or more modules corresponding to the foregoing function. In a possible design, the communication apparatus includes a transceiver unit and a processing unit. The transceiver unit is configured to: receive capability information, and determine a switching time of an uplink radio frequency chain of a terminal; when a first uplink signal is received on a first uplink carrier, send first signaling indicating the terminal to perform uplink switching; and omit receiving an uplink signal in a first time period, and receive a second uplink signal on a second uplink carrier. The first uplink carrier belongs to a first frequency band, and the first uplink carrier belongs to a first TAG. The second uplink carrier belongs to a second frequency band, and the second uplink carrier belongs to a second TAG. The first time period is greater than the uplink radio frequency chain switching time. The processing unit is configured to determine, based on the first signaling, not to receive the uplink signal in the first time period. These modules may perform corresponding functions in the method example in the second aspect. For details, refer to the detailed descriptions in the method example. The details are not described herein again.

According to a fifth aspect, a communication apparatus is provided. The communication apparatus may be the terminal or a chip in the terminal in the foregoing method embodiments. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal in the foregoing method embodiments.

According to a sixth aspect, a communication apparatus is provided. The communication apparatus may be a network device or a chip in a network device in the foregoing method embodiments. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the network device in the foregoing method embodiments.

According to a seventh aspect, a computer program product is provided. The computer program product includes computer program code. When the computer program code is run, the method performed by the terminal in the foregoing aspects is performed.

According to an eighth aspect, a computer program product is provided. The computer program product includes computer program code. When the computer program code is run, the method performed by the network device in the foregoing aspects is performed.

According to a ninth aspect, a chip system is provided. The chip system includes a processor, configured to implement the functions of the terminal in the method in the foregoing aspects. In a possible design, the chip system further includes a memory, configured to store program instructions and/or data. The chip system may include a chip, or may include a chip and another discrete component.

According to a tenth aspect, a chip system is provided. The chip system includes a processor, configured to implement the functions of the network device in the method in the foregoing aspects. In a possible design, the chip system further includes a memory, configured to store program instructions and/or data. The chip system may include a chip, or may include a chip and another discrete component.

According to an eleventh aspect, a computer-readable storage medium is provided. The computer-readable storage medium stores a computer program. When the computer program is run, the method performed by the terminal in the foregoing aspects is implemented.

According to a twelfth aspect, a computer-readable storage medium is provided. The computer-readable storage medium stores a computer program. When the computer program is run, the method performed by the network device in the foregoing aspects is implemented.

According to a thirteenth aspect, a communication system is provided. The communication system includes the terminal described in the third aspect or the communication apparatus that supports the terminal in implementing the method described in the first aspect and the network device described in the fourth aspect or the communication apparatus that supports the network device in implementing the method described in the second aspect.

Alternatively, the communication system includes the terminal described in the fifth aspect or the communication apparatus that supports the terminal in implementing the method described in the first aspect and the network device described in the sixth aspect or the communication apparatus that supports the network device in implementing the method described in the second aspect.

In this application, names of the terminal, the network device, and the communication apparatus constitute no limitation on the devices. During actual implementation, the devices may have other names. Provided that functions of the devices are similar to those in this application, the devices fall within the scope of the claims of this application and equivalent technologies thereof.

## BRIEF DESCRIPTION OF DRAWINGS

FIG. 1 is a diagram of an architecture of a mobile communication system to which an embodiment of this application is applied;

FIG. 2 is a diagram of a radio frequency chain according to this application;

FIG. 3 is a flowchart of an uplink signal sending method according to this application;

FIG. 4 is a diagram of multi-TAG uplink carrier switching according to this application;

FIG. 5 is an example diagram of composition of a communication apparatus according to this application; and

FIG. 6 is an example diagram of composition of another communication apparatus according to this application.

## DESCRIPTION OF EMBODIMENTS

The following describes implementations of embodiments of this application in detail with reference to the accompanying drawings.

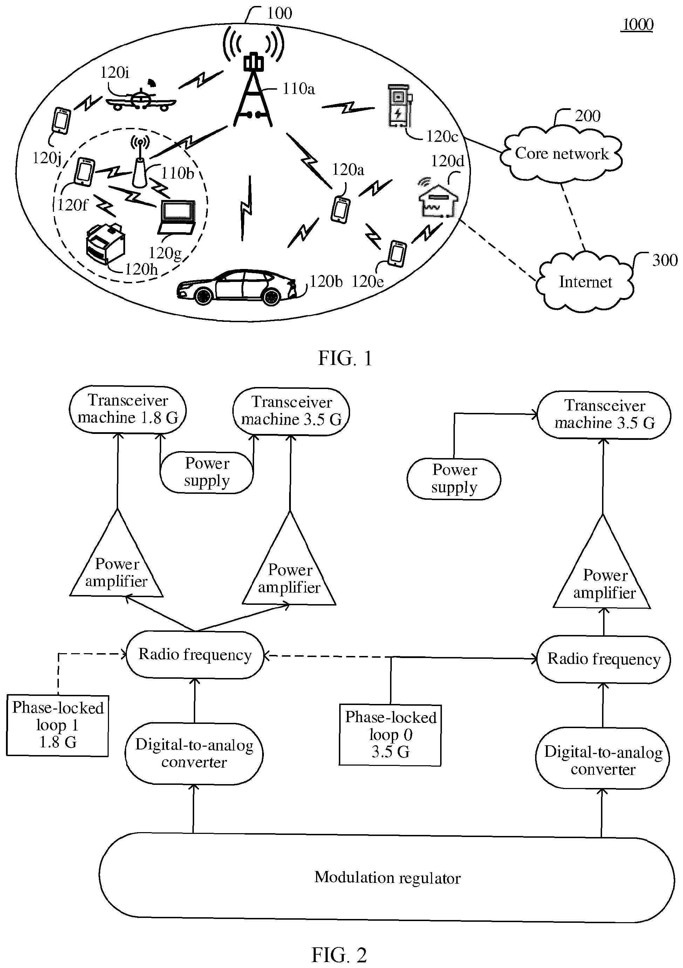

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of a core network device and logical functions of the radio access network device are integrated into a same physical device, or some functions of a core network device and some functions of the radio access network device are integrated into one physical device. A wired or wireless manner may be used for connection between terminals and between radio access network devices. FIG. 1 is merely a diagram. The communication system may further include other network devices, for example, may further include a wireless relay device and a wireless backhaul device, which are not shown in FIG. 1.

The radio access network device is an access device via which the terminal accesses the communication system in a wireless manner. The radio access network device may be a base station (base station), an evolved NodeB (evolved NodeB, eNodeB), a transmission reception point (transmission reception point, TRP), a next generation base station (next generation NodeB, gNB) in a 5th generation (5 generation, 5G) mobile communication system, a next generation base station in a 6th generation (6th generation, 6G) mobile communication system, a base station in a future mobile communication system, an access node in a Wi-Fi system, or the like. Alternatively, the radio access network device may be a module or a unit that completes some functions of a base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all of functions of a physical layer. For specific descriptions of the foregoing protocol layers, refer to related technical specifications in the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. For ease of description, the following provides descriptions by using an example in which the radio access network device is a base station.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, telemedicine, a smart grid, smart furniture, smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, the helicopter or uncrewed aerial vehicle 120i in FIG. 1 may be configured as a mobile base station. For the terminal 120j accessing the radio access network 100 via 120i, the terminal 120i is a base station. However, for the base station 110a, 120i is a terminal. In other words, communication between 110a and 120i is performed based on a radio air interface protocol. It is clear that communication between 110a and 120i may alternatively be performed based on an interface protocol between base stations. In this case, for 110a, 120i is also a base station. Therefore, both the base station and the terminal may be collectively referred to as a communication apparatus, 110a and 110b each in FIG. 1 may be referred to as a communication apparatus having a function of the base station, and 120a to 120j each in FIG. 1 may be referred to as a communication apparatus having a function of the terminal.

Communication between the base station and the terminal, between base stations, or between terminals may be performed over a licensed spectrum, or may be performed over an unlicensed spectrum, or may be performed over both a licensed spectrum and an unlicensed spectrum. Communication may be performed over a spectrum below 6 gigahertz (gigahertz, GHz), or may be performed over a spectrum above 6 GHz, or may be performed over both a spectrum below 6 GHz and a spectrum above 6 GHz. A spectrum resource used for wireless communication is not limited in embodiments of this application.

In embodiments of this application, the function of the base station may alternatively be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

In embodiments of this application, a time domain symbol may be an orthogonal frequency division multiplexing (orthogonal frequency division multiplexing, OFDM) symbol, or may be a discrete Fourier transform spread OFDM (Discrete Fourier Transform-spread-OFDM, DFT-s-OFDM) symbol. Unless otherwise specified, symbols in embodiments of this application are time domain symbols.

In embodiments of this application, a timing advance (Timing Advance, TA) is a timing advance that a network device indicates to a terminal to send an uplink signal, and is used to compensate for a propagation delay. It may be understood that an important feature of uplink transmission is that different terminals perform orthogonal multiple access (orthogonal multiple access) in time and frequency domain, in other words, uplink transmission of different terminals from a same cell does not interfere with each other. To ensure orthogonality of the uplink transmission and avoid intra-cell (intra-cell) interference, the network device requires that signals from different terminals in a same time domain resource (for example, a slot (slot)) but on different frequency domain resources (different resource blocks (resource blocks, RBs)) arrive at the network device at basically aligned time. Provided that the network device receives, in a cyclic prefix (Cyclic Prefix, CP) range, uplink data sent by the terminal, the network device can correctly decode the uplink data. Therefore, uplink synchronization requires that time at which signals from different terminals in a same time domain resource arrive at the network device all fall within the CP. The network device may control, by properly controlling a timing offset of each terminal, time at which uplink signals from different terminals arrive at the network device. A terminal relatively far away from the network device has a relatively long transmission delay. Therefore, the terminal relatively far away from the network device sends uplink data earlier than a terminal relatively close to the network device.

The network device determines a value of a timing advance of the terminal by measuring uplink transmission of the terminal. Theoretically, any uplink signal sent by the terminal may be used to measure the timing advance. For example, the uplink signal includes a sounding reference signal (sounding reference signal, SRS), a demodulation reference signal (demodulation reference signal, DMRS), and a channel quality indicator (Channel Quality Indicator, CQI).

In a random access procedure, the network device determines a timing advance by measuring a received random access preamble (preamble), and delivers initial timing adjustment via a timing advance command in a RAR. In a radio resource control (Radio Resource Control, RRC) connected state, timing at which an uplink signal arrives at the network device may change with time. Reasons include: changes in a distance between a terminal moving at a high-speed and the network device cause changes in a transmission delay between the terminal and the network device; an offset of the terminal causes long-time offset accumulation, and further causes errors in an uplink timing; switching of a transmission path; and movement of the terminal causes a Doppler frequency shift. Therefore, the network device needs to send dynamic signaling to adjust the timing advance of the terminal.

To increase an uplink capacity, the terminal supports a radio frequency chain switching between two different frequency bands (for example, 3.5 GHz and 1.8 GHz), to occupy different frequency band resources for transmission of the uplink signal. For example, as shown in FIG. 2, the terminal includes two radio frequency chains. A first radio frequency chain supports a 3.5 GHz frequency band, and a second radio frequency chain supports the 3.5 GHz frequency band and a 1.8 GHz frequency band. The terminal may send the uplink signal based on the 3.5 GHz frequency band supported by the first radio frequency chain and the second radio frequency chain; or the terminal sends the uplink signal on the 1.8 GHz frequency band supported by the second radio frequency chain. When radio frequency chain switching (Tx switching) of the second radio frequency chain of the terminal is performed between the 3.5 GHz frequency band and the 1.8 GHz frequency band, at least hardware phase-locked loop switching, power amplifier (Power amplifier, PA) switching, and the like are included. Therefore, there is a radio frequency chain switching time when the terminal performs the radio frequency chain switching.

It should be understood that one carrier corresponds to one timing advance group, and different carriers correspond to different timing advance groups.

When the terminal accesses at least two cells that are deployed in a non-co-located manner and obtains a plurality of timing advance groups, because timing advances of a plurality of uplink carriers are separately delivered by cells of a plurality of network devices that are non-co-located, frame boundaries of two corresponding uplink carriers are not aligned. In this case, when the terminal performs the radio frequency chain switching, uplink transmission is started before the uplink radio frequency chain switching is completed. Consequently, service interruption is caused.

To resolve the problem of service interruption caused by the radio frequency chain switching in non-co-located deployment, this application provides an uplink signal sending method. To be specific, a terminal sends capability information, so that a network device determines a switching time of an uplink radio frequency chain of the terminal. When a first uplink signal is sent to a first network device on a first uplink carrier, the terminal obtains first signaling indicating uplink carrier switching, omits sending an uplink signal in a first time period, and sends a second uplink signal to a second network device on a second uplink carrier. The first uplink carrier belongs to a first frequency band, and the first uplink carrier belongs to a first TAG. The second uplink carrier belongs to a second frequency band, and the second uplink carrier belongs to a second TAG. The first time period is greater than the uplink radio frequency chain switching time. In this way, when the terminal performs switching between two different uplink carriers, after waiting for a time period longer than the uplink radio frequency chain switching time indicated by a capability of the terminal, the terminal sends the uplink signal on the second uplink carrier to which the uplink radio frequency chain is switched from the first uplink carrier. This avoids service interruption caused, due to non-alignment between frame boundaries of the uplink carriers before and after the uplink carrier switching, when the terminal starts uplink transmission after a switching time of an uplink radio frequency chain and before the uplink radio frequency chain switching is completed. In addition, this helps achieve a higher uplink transmission rate, higher spectrum utilization, and a larger uplink capacity by utilizing dynamic spectrum selection during uplink radio frequency chain switching in non-co-located deployment.

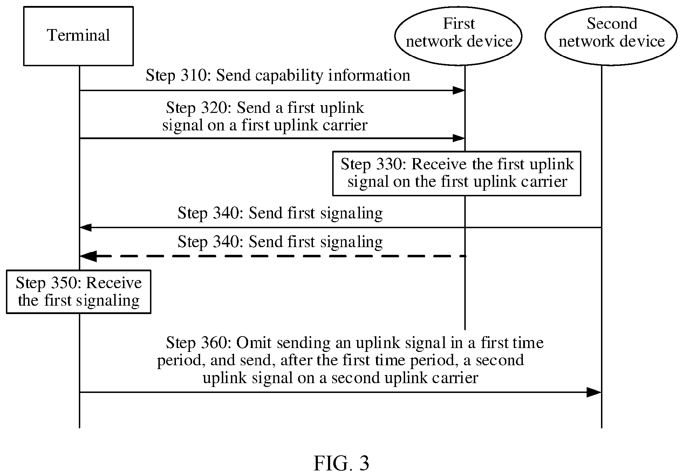

Next, FIG. 3 is a flowchart of an uplink signal sending method according to this application. Herein, an example in which a terminal performs radio frequency chain switching in a plurality of timing advance groups is used for description. As shown in FIG. 3, the method may include the following steps.

Step 310: The terminal sends capability information on a first uplink carrier. The capability information indicates a switching time (switching time) of an uplink radio frequency chain of the terminal. For example, a value of the uplink radio frequency chain switching time may be 140 microseconds (microseconds, $\mu$s), 35 $\mu$s, or 210 $\mu$s.

The terminal reports, to a network device, that the terminal has a radio frequency chain switching capability. A first time period indicates that the terminal omits sending an uplink signal in the first time period. A first network device receives the capability information on the first uplink carrier, or a second network device receives the capability information on the first uplink carrier.

The terminal accesses a cell #1 of the first network device and a cell #2 of the second network device, and the two cells belong to network devices at different sites. The cell #1 belongs to a first TAG, and the cell #2 belongs to a second TAG.

Step 320: The terminal sends a first uplink signal to the first network device on the first uplink carrier.

After accessing the cell #1 deployed by the first network device, the terminal sends, based on the first TAG, the first uplink signal to the first network device on the first uplink carrier provided by the cell #1. The first uplink carrier belongs to a first frequency band.

Step 330: The first network device receives the first uplink signal on the first uplink carrier.

Step 340: The first network device or the second network device sends first signaling. The first signaling indicates uplink carrier switching.

Step 350: The terminal receives the first signaling.

The terminal receives the first signaling sent by the first network device or the second network device. For example, the first instruction may be downlink control information (Downlink Control Information, DCI). The network device indicates the terminal to switch an uplink from a first carrier to a second carrier. The first signaling further indicates a second time interval, where the second time interval indicates an interval between an end symbol of a physical downlink control channel that carries the first signaling and a start symbol of an uplink channel. The uplink channel may be a physical uplink shared channel, a physical uplink control channel, or an uplink sounding reference signal.

Step 360: The terminal omits sending the uplink signal in the first time period, and sends, after the first time period, a second uplink signal to the second network device on a second uplink carrier. It may also be understood as that the terminal does not expect the second time interval to be less than the first time period. When the second time interval indicated by the first signaling received by the terminal is less than the first time period, the terminal discards the first signaling.

After receiving the first instruction, the terminal triggers uplink radio frequency chain switching. Because the first network device and the second network device are non-co-located, the first TAG corresponding to the first network device and the second TAG corresponding to the second network device are also different.

If frame boundaries of the first uplink carrier and the second uplink carrier are not aligned, and slot boundaries and orthogonal frequency division multiplexing (orthogonal frequency division multiplexing, OFDM) symbol boundaries are also not aligned, the terminal omits sending the uplink signal in the first time period greater than the uplink radio frequency chain switching time. After waiting for the first time period to ensure that the radio frequency chain is switched from the first uplink carrier to the first uplink carrier, the terminal device may send the uplink signal on the second uplink carrier. The second uplink carrier belongs to a second frequency band, and the second uplink carrier belongs to the second TAG. The first frequency band is different from the second frequency band. For example, the first frequency band may be a 3.5 GHz frequency band, and the second frequency band may be a 1.8 GHz frequency band. The first frequency band and the second frequency band form a first frequency band pair (band pair). The first frequency band pair is included in a first frequency band combination, and the first frequency band combination includes three or four uplink frequency bands that can be used to send uplink transmission. Optionally, for a second frequency band pair that belongs to the first frequency band combination, if two frequency bands corresponding to the second frequency band pair respectively correspond to the first TAG and the second TAG, the first time period applied to uplink radio frequency chain switching interruption of the first frequency band pair is also applied to the second frequency band pair.

In a first possible implementation, the first time period is a time period subject to the uplink radio frequency chain switching, and the terminal device omits sending the uplink signal in the first time period, where the uplink signal includes but is not limited to a PUSCH, a physical uplink control channel (physical uplink control channel, PUCCH), and an SRS. The first time period is greater than or equal to a radio frequency chain switching time. The terminal device completes the uplink radio frequency chain switching in the first time period. The first time period satisfies the following Formula (1):

$$T' = T1 + T_{os} \text{ or } T' = \text{ceil}\ (T1/T_{os}) + 1 \quad \text{Formula (1)}$$

T' represents the first time period, to be specific, an interruption time in which the terminal performs the uplink radio frequency chain switching. T1 represents the uplink radio frequency chain switching time. $T_{os}$ represents duration of a symbol. The duration of the symbol may be determined based on different subcarrier spacings. For example, in the case of a subcarrier spacing being 15 kilohertz (kilohertz, kHz), a slot includes 12 or 14 time domain symbols, with a corresponding duration of 1 millisecond (millisecond, ms); and in the case of a subcarrier spacing being 60 kHz, a slot has corresponding duration shortened to 0.25 ms.

In a second possible implementation, a value of the first time period is related to a protocol-predefined maximum transmission timing difference (maximum transmission timing difference, MTTD). The MTTD indicates a maximum value of a transmission timing difference that can be handled by the terminal. For example, a value of the MTTD is 34.6 $\mu$s. When triggering the uplink radio frequency chain switching, the terminal may determine the first time period based on the switching time and the maximum transmission timing difference. For example, the first time period is greater than or equal to a sum of the switching time and the maximum transmission timing difference. The first time period satisfies the following Formula (2):

$$T' = \text{ceil}\{(T1 + T_{MTTD})/T_{os}\} \quad \text{Formula (2)}$$

T' represents the first time period. ceil represents rounding up. T1 represents the uplink radio frequency chain switching time. $T_{MTTD}$ represents the maximum transmission timing difference. $T_{os}$ represents duration of an OFDM symbol.

Table 1 MTTD indicators of inter-band carrier aggregation

| Frequency range of a TAG pair | Maximum uplink transmission timing difference ($\mu$s) |
|---|---|
| FR 1 | 34.6 |
| FR 2-1 | 8.5 |
| Between the FR 1 and the FR 2-1 | 26.1 |

In a third possible implementation, the first time period is greater than or equal to a sum of the switching time, a maximum transmission timing difference, and a protocol-predefined first value, where the protocol-predefined first value may alternatively be expressed as a margin, or a protocol-predefined first value for TA adjustment. The first time period satisfies the following Formula (3):

$$T'=\text{ceil}\{(T1+T_{MTTD}+Terror)/T_{os}\} \text{ Formula (3)}$$

T' represents the first time period. ceil represents rounding up. T1 represents the uplink radio frequency chain switching time. $T_{MTTD}$ represents the maximum transmission timing difference. Terror represents the protocol-predefined first value. $T_{os}$ represents duration of a symbol.

In a fourth possible implementation, the first time period is greater than or equal to a sum of the switching time, double maximum transmission timing differences, and a protocol-predefined first value, where the protocol-predefined first value may alternatively be expressed as a margin, or a protocol-predefined first value for TA adjustment. The first time period satisfies the following Formula (4):

$$T'=\text{ceil}\{(T1+2*T_{MTTD}+Terror)/T_{os}\} \text{ Formula (4)}$$

In this way, when the terminal performs switching between two different uplink carriers, after waiting for a time period longer than the uplink radio frequency chain switching time indicated by a capability of the terminal, the terminal sends the uplink signal on the second uplink carrier to which the uplink radio frequency chain is switched from the first uplink carrier. This avoids service interruption caused, due to non-alignment between frame boundaries of the uplink carriers before and after the uplink carrier switching, when the terminal starts uplink transmission after a switching time of an uplink radio frequency chain and before the uplink radio frequency chain switching is completed. In addition, this helps achieve a higher uplink transmission rate, higher spectrum utilization, and a larger uplink capacity by utilizing dynamic spectrum selection during uplink radio frequency chain switching in non-co-located deployment.

In a fifth possible implementation, the UE omits sending the uplink transmission in the first time period, where the first time period is represented as a symbol overlapping the uplink radio frequency chain switching time on the first uplink carrier and/or a symbol overlapping the uplink radio frequency chain switching time on the second uplink carrier.

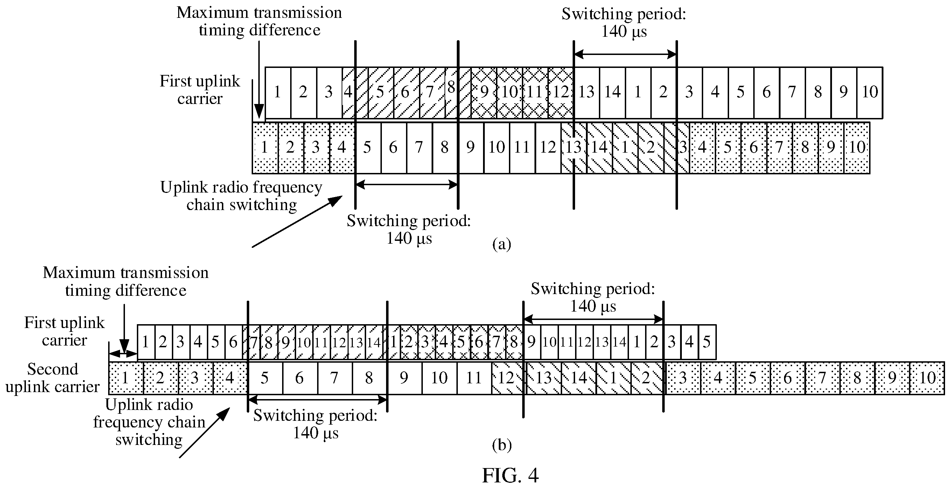

For example, as shown in (a) in FIG. 4, a subcarrier spacing of the first uplink carrier is the same as a subcarrier spacing of the second uplink carrier, and duration of a symbol included in the first uplink carrier is the same as duration of a symbol included in the second uplink carrier. Because the first TAG is different from the second TAG, frame boundaries and symbol boundaries of the two uplink carriers are not aligned. The terminal switches the uplink radio frequency chain from the second uplink carrier to the first uplink carrier. A start moment of the uplink radio frequency chain switching time is within a symbol 4 in a 1st slot, and an end moment of the uplink radio frequency chain switching time is within a symbol 8 in the 1st slot. The first time period includes the symbol 4 to the symbol 8, that is, duration of five symbols on the first uplink carrier.

The terminal starts transmission of the uplink signal from a symbol 9 in the 1st slot of the first uplink carrier. The terminal switches the uplink radio frequency chain from the first uplink carrier to a second uplink subcarrier. A start moment of the uplink radio frequency chain switching time is within a symbol 13 in a 1st slot of the second uplink carrier, and an end moment of the uplink radio frequency chain switching time is within a symbol 3 in a 2nd slot of the second uplink carrier. The first time period includes the symbol 13 to the symbol 3, that is, duration of five symbols on the second uplink carrier.

As shown in (b) in FIG. 4, a subcarrier spacing of the first uplink carrier is 60 kHz, a subcarrier spacing of the second uplink carrier is 30 kHz, and duration of a symbol included in the first uplink carrier is different from duration of a symbol included in the second uplink carrier. A start moment of the uplink radio frequency chain switching time is within a symbol 7 in a 1st slot of the first uplink carrier, and an end moment of the uplink radio frequency chain switching time is within a symbol 1 in a 2nd slot. The first time period includes the symbol 7 in the 1st slot to the symbol 1 in the 2nd slot, that is, duration of nine symbols on the first uplink carrier.

The terminal starts transmission of the uplink signal from the symbol 1 in the 2nd slot of the first uplink carrier. The terminal switches from the first uplink carrier to the second uplink subcarrier. A start moment of the uplink radio frequency chain switching time is within a symbol 12 in a 1st slot of the second uplink carrier, and an end moment of the uplink radio frequency chain switching time is within a symbol 2 in a 2nd slot of the second uplink carrier. The first time period includes the symbol 12 to the symbol 2, that is, duration of five symbols on the second uplink carrier.

In some other embodiments, the terminal reporting the uplink radio frequency chain switching time in the mTAG to the network device may be independent of the terminal reporting a switching time of an uplink radio frequency chain in a single TAG to the network device. For example, the terminal triggers uplink radio frequency chain switching in the mTAG, and the uplink radio frequency chain switching time is determined based on the uplink radio frequency chain switching time in the single TAG and duration of a symbol. For example, the uplink radio frequency chain switching time in the mTAG satisfies Formula (5).

$$T''=T2+T_{os} \quad \text{Formula (5)}$$

T" represents the uplink radio frequency chain switching time in the mTAG. T2 represents the uplink radio frequency chain switching time in the single TAG. $T_{os}$ represents the duration of the symbol.

It may be understood that, to implement functions in the foregoing embodiments, the base station and the terminal include corresponding hardware structures and/or software modules for performing various functions. A person skilled in the art should be easily aware that, with reference to the units and method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

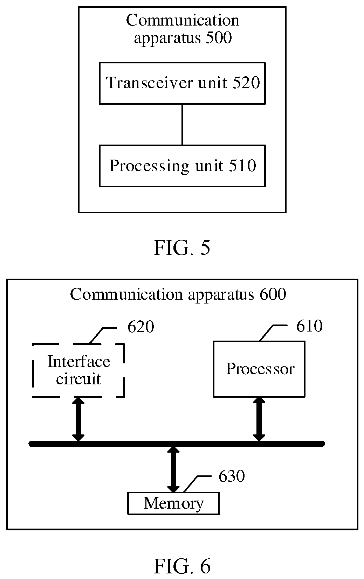

FIG. 5 and FIG. 6 are diagrams of structures of possible communication apparatuses according to embodiments of this application. These communication apparatuses may be configured to implement functions of the terminal or the base station in the foregoing method embodiments, and therefore can also achieve beneficial effects of the foregoing method embodiment. In embodiments of this application, the communication apparatus may be one of the terminals 120a to 120j shown in FIG. 1, or may be the base station 110a or 110b shown in FIG. 1, or may be a module (such as a chip) used in the terminal or the base station.

As shown in FIG. 5, a communication apparatus 500 includes a processing unit 510 and a transceiver unit 520. The communication apparatus 500 is configured to implement functions of the terminal or the base station in the method embodiment shown in FIG. 3.

When the communication apparatus 500 is configured to implement the functions of the terminal in the method embodiment shown in FIG. 3, the transceiver unit 520 is configured to: send capability information on a first uplink carrier, so that a network device determines a switching time of an uplink radio frequency chain of the terminal; when a first uplink signal is sent to a first network device on the first uplink carrier, obtain first signaling indicating uplink carrier switching; and omit sending an uplink signal in a first time period, and send, after the first time period, a second uplink signal to a second network device on a second uplink carrier, for example, perform step 310, step 320, step 330, and step 360 shown in FIG. 3.

The processing unit 510 is configured to determine the first time period.

When the communication apparatus 500 is configured to implement the functions of the base station in the method embodiment shown in FIG. 3, the transceiver unit 520 is configured to: receive capability information on a first uplink carrier; send first signaling, indicating a terminal to perform uplink carrier switching; omit receiving an uplink signal in a first time period, and receive, after the first time period, a second uplink signal on a second uplink carrier, for example, perform step 340 and step 350 shown in FIG. 3.

The processing unit 510 is configured to determine a switching time of an uplink radio frequency chain of the terminal.

For more detailed descriptions of the processing unit 510 and the transceiver unit 520, refer to related descriptions in the method embodiment shown in FIG. 3.

As shown in FIG. 6, a communication apparatus 600 includes a processor 610 and an interface circuit 620. The processor 610 and the interface circuit 620 are coupled to each other. It may be understood that the interface circuit 620 may be a transceiver or an input/output interface. Optionally, the communication apparatus 600 may further include a memory 630, configured to: store instructions executed by the processor 610, store input data needed by the processor 610 to run instructions, or store data generated after the processor 610 runs instructions.

When the communication apparatus 600 is configured to implement the method shown in FIG. 3, the processor 610 is configured to implement functions of the processing unit 510, and the interface circuit 620 is configured to implement functions of the transceiver unit 520.

When the communication apparatus is a chip used in a terminal, the chip in the terminal implements functions of the terminal in the foregoing method embodiment. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to a base station.

When the communication apparatus is a module used in a base station, the module in the base station implements functions of the base station in the foregoing method embodiment. Th module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that the processor in embodiments of this application may be a central processing unit (Central Processing unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the base station or the terminal. The processor and the storage medium may alternatively exist in the base station or the terminal as discrete components.

All or some of the foregoing embodiments may be implemented by software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1.	An uplink signal sending method, performed by a terminal or a module used in a terminal, and comprising:

   sending capability information to a first network device on a first uplink carrier, wherein the capability information indicates a switching time of an uplink radio frequency chain of the terminal;
   sending a first uplink signal to the first network device on the first uplink carrier, wherein the first uplink carrier belongs to a first frequency band, and the first uplink carrier belongs to a first timing advance group TAG;

receiving first signaling from the first network device, wherein the first signaling indicates the terminal to perform uplink carrier switching; and

omitting sending an uplink signal in a first time period, and sending, after the first time period, a second uplink signal to a second network device on a second uplink carrier, wherein the second uplink carrier belongs to a second frequency band, the second uplink carrier belongs to a second TAG, the first time period is greater than the uplink radio frequency chain switching time, the first frequency band is different from the second frequency band, and the first TAG is different from the second TAG.

2. The method according to claim 1, wherein the first time period is greater than or equal to a sum of the switching time and a maximum transmission timing difference.

3. The method according to claim 1, wherein the first time period is greater than or equal to a sum of the switching time, a maximum transmission timing difference, and a protocol-predefined first value.

4. The method according to claim 1, wherein the first time period is a time period corresponding to a symbol overlapping the uplink radio frequency chain switching time of the terminal on the first uplink carrier and/or a symbol overlapping the uplink radio frequency chain switching time of the terminal on the second uplink carrier.

5. The method according to claim 1, wherein the first time period is greater than or equal to a sum of the switching time, double maximum transmission timing differences, and a protocol-predefined first value.

6. A communication apparatus, comprising a processor and an interface circuit, wherein the interface circuit is configured to: receive a signal from another communication apparatus and transmit the signal to the processor, or send a signal from the processor to another communication apparatus; and the processor is configured to implement the method according to any one of claims 1 to 5 by using a logic circuit or by executing code instructions.

7. A computer-readable storage medium, wherein the storage medium stores a computer program or instructions; and when the computer program or the instructions are executed by a communication apparatus, the method according to any one of claims 1 to 5 is implemented.

FIG. 1

FIG. 2

FIG. 3

EP 4 586 660 A1

Maximum transmission
timing difference

Switching period:
140 µs

First uplink
carrier

| 1 | 2 | 3 | 4 | 5 | 6 | 7 | 8 | 9 | 10 | 11 | 12 | 13 | 14 | 1 | 2 | 3 | 4 | 5 | 6 | 7 | 8 | 9 | 10 |

| 1 | 2 | 3 | 4 | 5 | 6 | 7 | 8 | 9 | 10 | 11 | 12 | 13 | 14 | 1 | 2 | 3 | 4 | 5 | 6 | 7 | 8 | 9 | 10 |

Uplink radio frequency
chain switching

Switching period:
140 µs

(a)

Maximum transmission
timing difference

Switching period:
140 µs

First uplink
carrier

| 1 | 2 | 3 | 4 | 5 | 6 | 7 | 8 | 9 | 10 | 11 | 12 | 13 | 14 | 1 | 2 | 3 | 4 | 5 | 6 | 7 | 8 | 9 | 10 | 11 | 12 | 13 | 14 | 1 | 2 | 3 | 4 | 5 |

Second
uplink carrier

| 1 | 2 | 3 | 4 | 5 | 6 | 7 | 8 | 9 | 10 | 11 | 12 | 13 | 14 | 1 | 2 | 3 | 4 | 5 | 6 | 7 | 8 | 9 | 10 |

Uplink radio
frequency chain
switching

Switching period:
140 µs

(b)

FIG. 4

Communication
apparatus 500

Transceiver unit 520

Processing unit 510

FIG. 5

Communication apparatus 600

620

610

Interface
circuit

Processor

630

Memory

FIG. 6

## INTERNATIONAL SEARCH REPORT

| International application No. |
|---|
| **PCT/CN2023/120018** |

| A. | CLASSIFICATION OF SUBJECT MATTER |
|---|---|

H04W8/24(2009.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT; CNKI; ENTXTC; DWPI; IEEE; 3GPP: 上行, 载波, 射频链, 切换, 能力, 时间, 频段, 定时提前, 不同, 不发送, 中断, uplink, carrier, radio frequency chain, switch, capability, time, frequency band, TAG, different, not sent, interruption

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114126056 A (HUAWEI TECHNOLOGIES CO., LTD.) 01 March 2022 (2022-03-01) description, paragraphs [0089]-[0124] and [0323]-[0326] | 1-7 |
| A | CN 112514432 A (QUALCOMM INC.) 16 March 2021 (2021-03-16) entire document | 1-7 |
| A | CN 112751600 A (CHINA TELECOM CORPORATION LIMITED) 04 May 2021 (2021-05-04) entire document | 1-7 |
| A | WO 2022161051 A1 (HUAWEI TECHNOLOGIES CO., LTD.) 04 August 2022 (2022-08-04) entire document | 1-7 |
| A | CHINA TELECOM. "Discussion on Tx switching between 1 carrier on band A and 2 contiguous aggregated carriers on band B" *3GPP TSG-RAN WG4 Meeting #97-e R4-2015198*, 13 November 2020 (2020-11-13), entire document | 1-7 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 November 2023** | **22 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| CN | 114126056 | A | 01 March 2022 | None | | | |
| CN | 112514432 | A | 16 March 2021 | US | 2020037383 | A1 | 30 January 2020 |
| | | | | KR | 20210036346 | A | 02 April 2021 |
| | | | | WO | 2020028366 | A1 | 06 February 2020 |
| | | | | SG | 11202013161 | VA | 30 March 2021 |
| | | | | TW | 202014039 | A | 01 April 2020 |
| | | | | EP | 3831107 | A1 | 09 June 2021 |
| | | | | IN | 202047057106 | A | 05 February 2021 |
| CN | 112751600 | A | 04 May 2021 | None | | | |
| WO | 2022161051 | A1 | 04 August 2022 | CN | 114828240 | A | 29 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211215709